# EUROPEAN PATENT SPECIFICATION

(11) **EP 1 900 620 B1**
(45) Date of publication and mention of the grant of the patent: **18.11.2009**
(21) Application number: 07253618.8
(22) Date of filing: 12.09.2007
(51) Int. Cl.: B62D 53/12

(54) **A plug in coupling arrangement for a tractor and a trailer**
Steckkupplungsanordnung für einen Schlepper und einen Anhänger
Agencement de couplage enfichable pour tracteur et remorque

(30) Priority: 15.09.2006 GB 0618188
(43) Date of publication of application: 19.03.2008
(73) Proprietor: Fontaine International Europe Limited, Lowton, Warrington WA3 2AG (GB)
(72) Inventor: Hayes, Anthony, WA7 4YT (GB)
(74) Representative: Barker, Rosemary Anne

(56) References cited:
- WO-A-2005/110836
- US-A- 3 391 950
- SERMA VIRIAT: "Attelage automatique 44t" SERMA BROCHURE, XX, XX, 16 October 1996 (1996-10-16), pages 1-2, XP003008111

## Description

This invention concerns a trailer kingpin assembly for use in a plug in arrangement for connecting leads, namely electrical cables and fluid conduits, between a tractor vehicle and the trailer.

More specifically, the invention is applicable to an articulated vehicle where a kingpin is provided on the underside of the trailer and a fifth wheel coupling, into which the kingpin is designed to engage and lock, is provided on the tractor (towing) vehicle. In this respect the fifth wheel coupling is provided with an opening or slot which tapers in the direction of travel of the vehicle, into which opening or slot the kingpin enters in order to be engaged by a locking jaw of the fifth wheel.

Conventionally, after coupling the trailer to the tractor, supply leads for power and fluid are connected manually between the two, and these leads also have to be disconnected manually before uncoupling of the trailer.

Proposals have been made for various plug in arrangements to automate the connection and separation of these power and fluid lines. One such arrangement is disclosed in WO 03/039940 where a socket for the connecting leads is provided in the fifth wheel at a location facing into one side of the slot for receiving the kingpin. This socket is operable to move into the slot to engage with corresponding plugs on a wedge shaped coupling part which is mounted onto the kingpin and extends behind the kingpin so as to move into the slot behind it as the connection is made between the trailer and the tractor vehicle. A similar arrangement for automated connection of electrical and fluid leads in a draw-bar style of coupling is described in WO 01/60645.

These arrangements have the advantage that the connection between the electrical and fluid lines, which involve sensitive precision mechanics, are made subsequent to the main mechanical connection between the trailer and tractor which can involve considerable force and which might adversely affect the electrical and fluid connection, particularly if not accurately aligned. However these arrangements also have drawbacks. Firstly it is essential that there are no components projecting into the slot in the fifth wheel upon entry of the kingpin, the sides of the slot being tapered for guidance of the kingpin into its correct coupling position in the base of the slot. At least one sensor is required to sense the presence of the kingpin in its coupled position, which sensor must be integrated into an electrical system which allows/causes projection of the socket only when the kingpin reaches this position, and which effects retraction of the socket and disconnection of the electrical and fluid lines prior to uncoupling of the kingpin. However, such an arrangement has significant potential for malfunction and damage to the protrudable socket and the electrical and fluid lines. Thus the reliability of such a system is questionable. Another drawback is the requirement to modify the existing design of fifth wheel coupling to accommodate the socket for the electrical and fluid lines.

Another automated plug in arrangement is disclosed in WO 05/110836 where static sockets for the connecting leads are provided on the fifth wheel below the level of the insertion slot for reception of the kingpin and corresponding plugs are provided on a carrier device which is swivelably mounted adjacent and around the kingpin. A similar arrangement is known to have been promoted commercially by the French company SERMA. With these arrangements, connection of the electrical and fluid lines occurs at the same time as the mechanical connection is made between the kingpin and the fifth wheel. These arrangements have the disadvantage mentioned above of the likely force engendered upon mechanical connection even when accurate alignment between the respective connectable plugs and sockets of the electrical and fluid lines is provided for by a carrier device for the trailer side leads being suitably tapered and guided into the slot to the rear of the kingpin in the direction of travel. However, modification of the fifth wheel is not required. Such arrangements still make use of existing fifthwheel designs.

US 3, 391,950, according to the preamble features of claim 1, discloses a plug in arrangement which is similar in principle to those just mentioned, the only difference being the provision of solenoid actuated movement of the sockets (or plugs) mounted to the fifth wheel in order to disconnect the electrical and fluid lines.

In the known SERMA arrangement the aforesaid carrier device for the trailer side electrical and fluid leads is attached to a turntable which is rotatable concentrically of the kingpin, and which is mounted onto the underside of the trailer, along with the kingpin, by a specially designed back plate, which replaces the previous conventional kingpin mounting.

In the arrangement disclosed in WO 05/110836, an annular retainer disk is fixed to an assembly plate around the base of the kingpin, at a spacing below said assembly plate, and the carrier device has a mounting web provided with projecting parts which engage behind the retaining disk so as to be rotatably retained by same. The carrier device also has a supporting web which rests against a conventional enlarged terminal flange of the kingpin.

In the arrangement disclosed in US 3,391,950 a carrier plate for the trailer side leads is mounted onto an aligning rod which is mounted to the kingpin by means of a cage which fits around and below a terminal flange of the kingpin.

The depth of the slot in the fifth wheel matches the free dependent length of a conventional kingpin, and their respective positions, which need to be exactly at the same level, are in turn dictated by the height of the underside of the trailer and of the fifth wheel mounting on the tractor vehicle. These usually cannot be modified on existing vehicles and trailers and for economic reasons it is desirable to minimise the clearance between the underside of the trailer and the tractor chassis.

The aforesaid carrier mounting arrangements all require additional height compared to a conventional kingpin mounting. The turntable back plate or the assembly plate with retainer disk, respectively, must either be countersunk in the trailer underside, or else the fifth wheel mounting needs to be modified and lowered in order that the fifth wheel slot and the free dependent length of the king pin are at a common level for coupling. Since trailers are often required to be towed by different tractor vehicles, it is likely that trailer modification would be required when mounting either of these kingpin plug in coupling arrangements.

The object of the present invention is to provide an improved Kingpin assembly and a plug in arrangement incorporating same for connecting leads, namely electrical cables and fluid conduits, between a tractor vehicle and a trailer in which the disadvantages outlined for the previously known arrangements are minimised or obviated.

According to the present invention a Kingpin assembly is provided as specified in claim 1.

Mounting the carrier device for the trailer side part of the plug-in arrangement to a collar around the kingpin has a significant advantage of not adding to the overall height of the kingpin mounting assembly, as hitherto. Therefore, a conventional kingpin mounting can readily be replaced by a kingpin to which a carrier device mounting trailer side electrical and fluid leads is connected in accordance with the invention without any need for adaptation of the underside of the trailer or any change in the mounting height of the fifth wheel on the tractor vehicle.

The present invention accordingly also envisages a plug in arrangement comprising a kingpin assembly as specified together with a fifth wheel coupling on the tractor vehicle provided with a tractor side part of the plug-in arrangement below the level of the slot in the fifth wheel for reception of the kingpin.

An advantageous additional proposal is that the first part of the plug-in arrangement which is provided on the fifth wheel of the tractor vehicle should be mounted onto a plate which extends substantially perpendicular to the direction of travel, which plate is operable to move opposite to said direction of travel in order to connect to the trailer side part of the plug-in arrangement and in said direction of travel in order to disconnect from the trailer side part of the plug-in arrangement.

In this way, the connection between the electrical and fluid lines will only be made once the mechanical connection between the kingpin and the fifth wheel has been accomplished. At least one sensor will be provided on or adjacent the fifth wheel to confirm the presence of the king pin in the coupled position before the plate is moved to connect the electrical and fluid lines.

Furthermore, at least one sensor is preferably provided on or adjacent to said plate in order to detect its position, namely when it is in a position in which the electrical and fluid lines of the tractor and trailer will be connected (or, respectively, disconnected). This will allow for an electrical system of the vehicle to require disconnection of the electrical and fluid lines and sensing the same before the kingpin can be uncoupled from the fifth wheel.

The aforesaid proposals for movement of the tractor side part of the plug-in arrangement may be used in addition to or separately from the proposal relating to the manner of mounting the carrier device to the kingpin.

The invention will be described further, by way of example, with reference to the accompanying drawings, in which:
Figure 1 is an exploded perspective view from above of a fifth wheel and its mounting arrangement and a kingpin assembly which is capable of coupling thereto in accordance with the present invention;
Figure 2 is a similar view to figure 1, but with the whole arrangement turned through approximately 180°, thus viewed from the other direction;
Figure 3 is a cross-section through the apparatus shown in figures 1 and 2 when the mechanical connection and the electrical/fluid line connection has been accomplished;
Figure 4 is an enlarged cross-section of the kingpin assembly and tractor side plug in connection manifold of the apparatus shown in figure 3;
Figure 5 is an enlarged scale plan view of the tractor side connection manifold; and
Figure 6 is a similar enlarged scale plan view of the trailer side connection manifold.

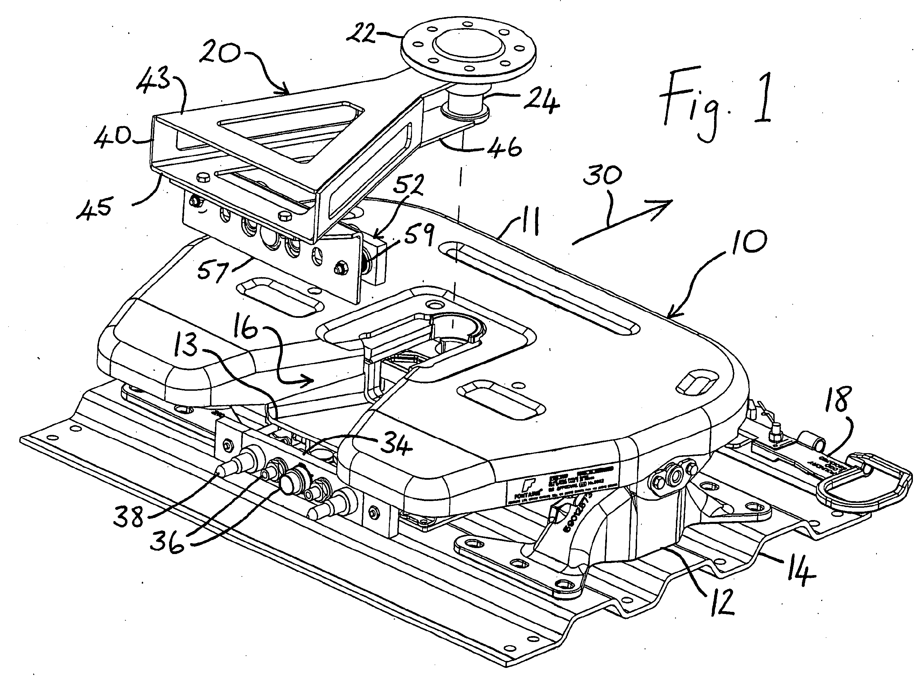

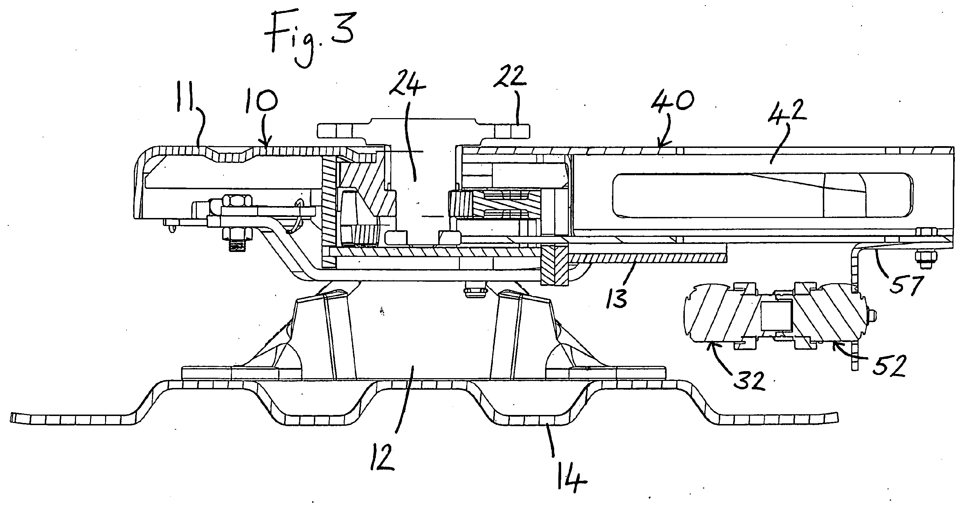

Figures 1 to 3 of the drawings show a fifth wheel coupling designated generally by reference 10 and a kingpin assembly designated generally by reference 20.

In use, the fifth wheel coupling 10 is mounted onto the rear of the tractor vehicle (not shown) by way of mounting brackets 12 and a mounting plate 14. The fifth wheel coupling 10 has a V-shaped slot or recess 16 which tapers in the direction of travel of the vehicle, which is indicated generally by arrow 30.

In use also, the kingpin assembly 20 is mounted onto the underside of the front portion of a trailer (not shown) by means of a circular back plate 22. Upon coupling the trailer to the tractor vehicle, the kingpin 24, which depends from the back plate 22, enters the slot 16 in the direction of travel 30 and is guided to the base (front end) of the slot 16 by the sloping sides of same. Here the kingpin 24 contacts a locking jaw (not shown) which is pivotally mounted in the fifth wheel 10 and causes the locking jaw to pivot into engagement behind the kingpin 24. A locking bar (not shown) then moves into place behind the locking jaw. This locking bar can subsequently be manually released by means of a release arm 18, although automated release mechanisms are also known.

All the above is conventional.

Electrical cables and fluid lines of the tractor, the latter usually being lines for supply of compressed air to pneumatic actuators, have to be connected up to those of the trailer once the trailer is mechanically coupled to the tractor vehicle. Later, these lines have to be disconnected prior to or upon uncoupling of the trailer from the tractor vehicle.

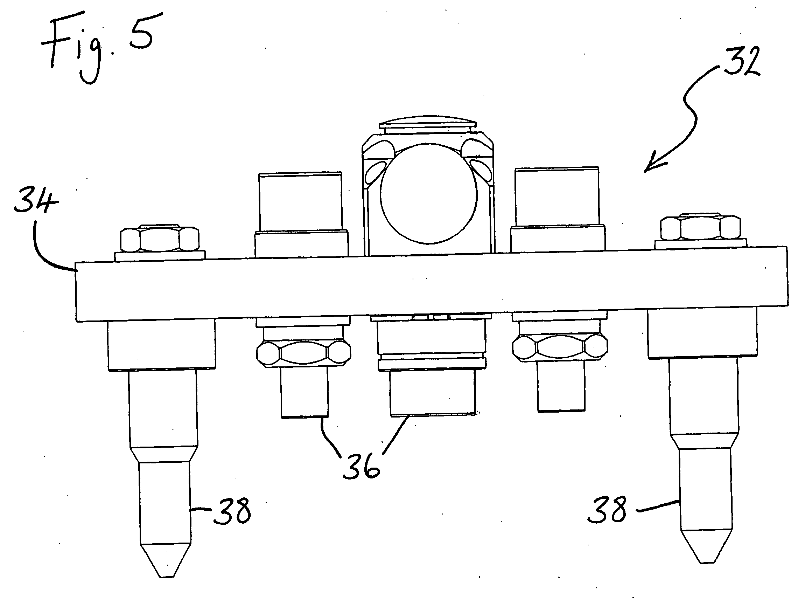

The fifth wheel coupling 10 includes a top plate 11 and an underside guidance web 13. The aforesaid locking jaw and locking bar are mounted between these and, upon coupling, the lower end of the kingpin 24 is guided across the upper surface of the web 13. A connector manifold 32 for the tractor side electrical and fluid lines is mounted to the underside of the guidance web 13. As best shown in Figure 5, this manifold 32 comprises a plate 34 which extends substantially perpendicular to the direction of travel 30 to which male plug connectors 36 for the respective electrical cables and fluid conduits as well as guide pins 38, which project beyond the connectors 36, are mounted. The manifold 32 is mounted to the underside of the web 13 in such a manner as to be displaceable to and fro in the direction of travel 30 by a distance of approximately 60 to 80 mm under the action of a pair of fluid actuated rams (not shown) which act between the plate 34 and a fixed part of the fifth wheel 10 or the tractor vehicle.

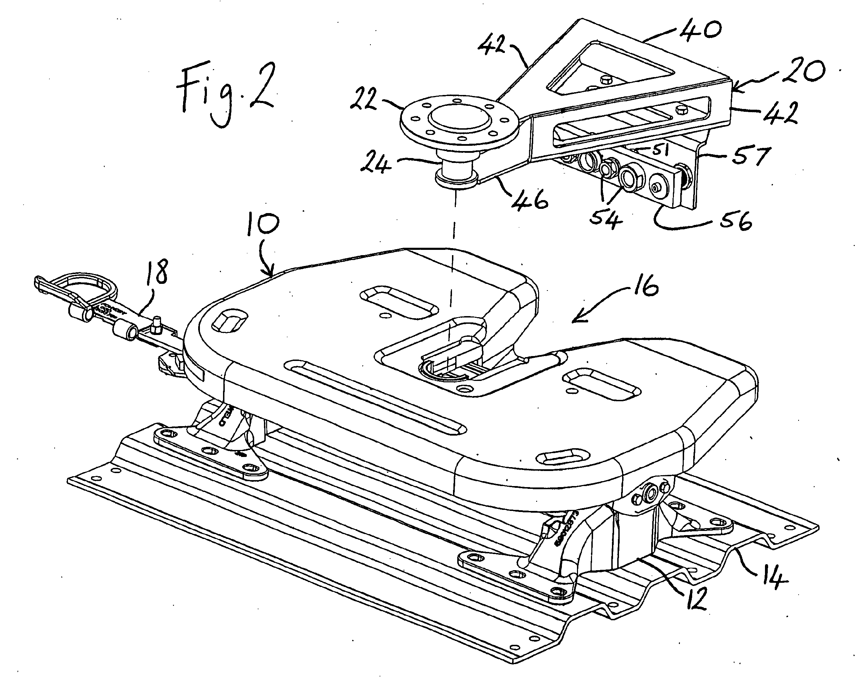

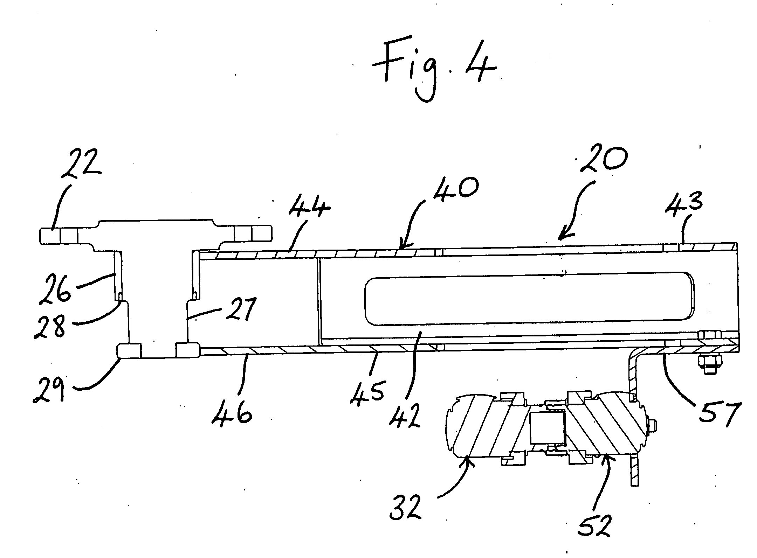

The kingpin assembly 20 includes a carrier device 40 which is mounted onto the kingpin 24 with its integral backing plate 22. The carrier device 40 comprises a generally triangular framework having respective sides 42 tapering to a front end where a mounting web 44 and a supporting web 46 respectively extend from upper and lower walls 43, 45 of the framework, as best shown in figures 1 and 2. The mounting web 44 of the carrier device 40 is fixed to a cylindrical collar 26 which is rotatably fitted around a base section of the kingpin 24, adjacent the backing plate 22, as best shown in Figure 4. A retaining ring 28 holds the collar 26 in position. A terminal flange is provided on the kingpin 24 by fitting a separate flange ring 29 after the mounting of the collar 26 and its attached carrier device 40. A narrower waist section 27 of the kingpin 24, as required for mechanical engagement in conventional manner by the lockjaw of the fifth wheel during trailer coupling, remains between the collar 26 and the flange ring 29.

The dimensions of the carrier device 40 correspond to those of the fifth wheel slot 16 so that it is readily guided into the slot, behind the kingpin 24 in the direction of travel 30 upon coupling of the trailer with the fifth wheel 10.

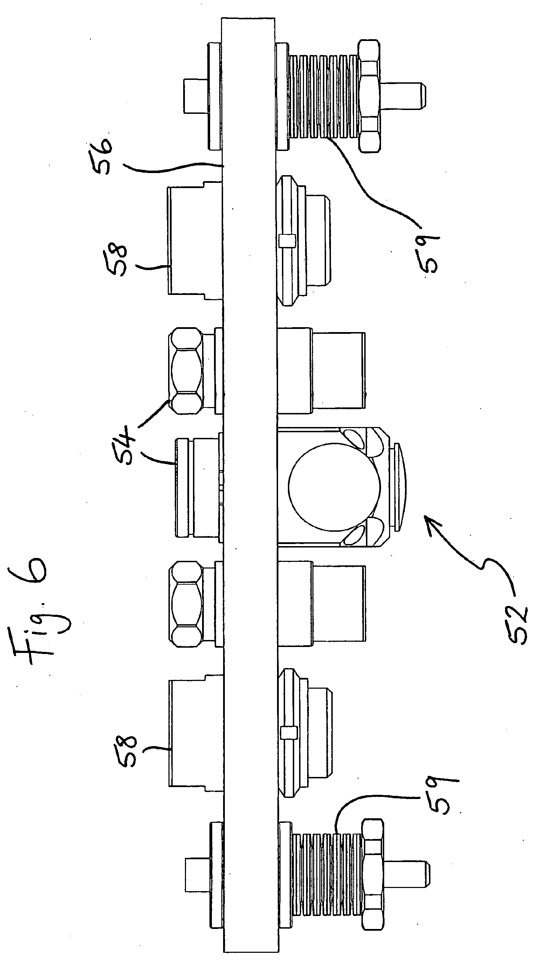

A comparable connector manifold 52 to that (32) provided on the underside of the fifth wheel 10 is mounted to the lower wall 45 of the carrier device 40. As best shown in Figure 6, this manifold 52 comprises female socket connectors 54 for the respective electrical cables and fluid conduits of the trailer mounted onto a plate 56. Bushes 58 defining apertures are also mounted in the plate 56 for reception of the guide pins 38 on the tractor side connector manifold 32. The plate 56 is connected to the lower wall 45 of the carrier device 40 by means of an L-section mounting bracket 57, with suitable springloaded connections 59 between the plate 56 and the bracket 57 to allow for relative movement between the trailer and the tractor vehicle in the direction of travel 30.

In operation, the kingpin 24 on the trailer is coupled with the fifth wheel 10 on the tractor vehicle in conventional manner. The carrier device 40 is guided in the direction of travel 30 into the slot 16 in the fifth wheel 10 behind the kingpin 24. This brings the connector manifold 52 closely adjacent the connector manifold 32 mounted below the fifth wheel 10 with projecting ends of the guide pins 38 on the plate 34 extending into the apertures of the bushes 58 in the plate 56 to ensure alignment. The rams (not shown) at the tractor side are then actuated to move the plate 34 into abutment with the plate 56, thereby also connecting the plugs 36 into the sockets 54 so as to connect up the electrical power supply and pneumatic fluid lines to the trailer. Apertures 51 in the bracket 57 allow for passage of the leads there through to the socket connectors 54.

At least one sensor (not shown) is provided on or adjacent to the plate 34 of the tractor side connector manifold 32 to detect when said plate 34 contacts the plate 56. Also, mechanical connector devices (not shown), such as clamps or screws or bolts, are preferably provided on the plate 34 and are operable to make a mechanical connection to the plate 56 once the plates are in contact. This secondary connection of the plates 34, 56 is important for safety purposes as a failsafe in the event that fluid pressure to the rams which hold the plate 34 in its advanced position abutting the plate 56 should diminish.

The overall sequence of operations upon coupling of the trailer to the tractor can be controlled by means of the tractor's electrical system from the driver's cab. Only once the kingpin 24 is detected (by virtue of a conventional proximity sensor) as being in its coupled position in the fifth wheel 10 can the tractor side connector manifold 32 be actuated to move into connection with the trailer side connector manifold 52. Then, once the sensor detects that the plates 34, 56 are in contact the mechanical connector devices can be actuated to secure this connection. A final stage in the sequence is the raising of deployed trailer support legs to allow the coupled tractor and trailer to be driven away.

In reverse, for uncoupling the trailer, the trailer support legs should first be lowered. After that, the mechanical connector devices must be released before the tractor side rams can be actuated to move the plate 34 away from the plate 56 and thereby uncouple the plugs 36 from the sockets 54 for the electrical and fluid lines. The sensor for the position of the plate 34 must then detect that the plates 34, 56 are apart before the locking bar of the fifth wheel 10 can be released to allow uncoupling of the kingpin 24.

The foregoing is illustrative and not limitative of the scope of the invention. Variations in detail are possible in other embodiments. In particular, the plugs and sockets of the plug in connector arrangement may be the opposite way around to those described and illustrated in the specific embodiment.

## Claims

1. A kingpin assembly for mounting on the underside of a trailer for purposes of engagement with a fifth wheel coupling (10) on a tractor vehicle, said assembly comprising a kingpin device (20) and a carrier device (40) which is mounted thereto, the kingpin device having a back plate (22) provided with means for mounting to the trailer and a projecting kingpin (24) which in use projects downwards from said back plate to engage into a slot (16) in the fifth wheel coupling (10), said kingpin (24) having a base section adjacent the back plate, a waist section (27) leading from the base section, and a terminal flange (29) of greater diameter than the waist section, and the carrier device (40) serving to mount a trailer side part (52) of a plug-in arrangement for connecting leads of electrical cables and fluid conduits, **characterised in that** the carrier device (40) is mounted onto the kingpin (24) device by means of a collar (26) which is rotatably retained about the base section of the kingpin (24).

2. A plug-in arrangement for connecting leads, namely electrical cables and fluid conduits, between a tractor vehicle and a trailer wherein a kingpin assembly according to claim 1 is provided on the underside of the trailer, the kingpin back plate (22) being mounted to the trailer with a kingpin (24) projecting downwards from said back plate, wherein a fifth wheel coupling (10) is provided on the tractor vehicle, the fifth wheel coupling (10) having a slot (16) which tapers in the direction of travel (30) of the vehicle, into which slot (16) the kingpin (24) enters in order to be engaged by a locking jaw of the fifth wheel, and wherein a tractor side part (plug or socket) (32) of the plug-in arrangement is provided on the fifth wheel coupling (10) below the level of the slot (16) for reception of the kingpin (24) and is operable to move opposite to said direction of travel (30) in order to connect to the trailer side part (52) of the plug-in arrangement and in said direction of travel in order to disconnect from the trailer side part of the plug-in arrangement.

3. A plug in arrangement according to claim 2 wherein the tractor side part (32) of the plug-in arrangement is mounted onto a plate (34) which extends substantially perpendicular to the direction of travel, which plate (34) is operable to move opposite to said direction of travel (30) in order to connect to the trailer side part (52) of the plug-in arrangement and in said direction of travel in order to disconnect from the trailer side part of the plug-in arrangement.

## Patentansprüche

1. Achsschenkelbolzenanordnung zum Montieren an der Unterseite eines Anhängers für Zwecke des Eingriffs in eine Sattelkupplung (10) an einem Zugfahrzeug, wobei die Anordnung eine Achschenkelbolzenvorrichtung (20) und eine daran montierte Trägervorrichtung (40) aufweist, wobei die Achsschenkelbolzenvorrichtung eine Rückplatte (22), die mit Mitteln zum Montieren an dem Anhänger versehen ist, und einen vorstehenden Achsschenkelbolzen (24) aufweist, der beim Gebrauch nach unten von der Rückplatte vorsteht, um in eine Aussparung (16) in der Sattelkupplung (10) einzugreifen, wobei der Achsschenkelbolzen (24) einen Basisabschnitt benachbart zu der Rückplatte, einen Mittelabschnitt (27), der von dem Basisabschnitt weg führt, und einen Endflansch (29) mit größerem Duchmesser als der Mittelabschnitt aufweist, und die Trägervorrichtung (40) dazu dient, ein Anhängerseitenteil (52) einer Steckkupplungsanordnung zum Verbinden von Leitungen von elektrischen Kabeln und Fluidleitungen zu montieren, **dadurch gekennzeichnet, dass** die Trägervorrichtung (40) an die Achsschenkelbolzenanordnung (24) mittels eines Kragens (26) montiert ist, der drehbar um den Basisabschnitt des Achsschenkelbolzens (24) gehalten ist.

2. Steckkupplungsanordnung zum Verbinden von Leitungen, nämlich elektrischen Kabeln und Fluidleitungen, zwischen einem Zugfahrzeug und einem Anhänger, wobei eine Achsschenkelbolzenanordnung nach Anspruch 1 an der Unterseite des Anhängers vorgesehen ist, wobei die Achsschenkelbolzenrückplatte (22) mit einem nach unten von der Rückplatte vorstehendem Achsschenkelbolzen (24) an den Anhänger montiert wird, wobei eine Sattelkupplung (10) an dem Zugfahrzeug vorgesehen ist, die eine Aussparung (16) aufweist, welche sich zur Fortbewegungsrichtung (30) des Fahrzeugs hin verjüngt und in welche der Achsschenkelbolzen (24) eintritt, um von einer Arretierbacke der Sattelkupplung in Eingriff gebracht zu werden, und wobei ein Zugfahrzeugseitenteil (Stecker oder Buchse) (32) der Steckkupplungsanordnung an der Sattelkupplung (10) unter dem Niveau des Schlitzes (16) zur Aufnahme des Achsschenkelbolzens (24) vorgesehen ist und in Funktion ist, sich entgegengesetzt zu der Fortbewegungsrichtung (30) zu bewegen, um das Anhängerseitenteil (52) der Steckkupplungsanordnung zu verbinden, und in Fortbewegungsrichtung, um von dem Anhängerseitenteil der Steckkupplungsanordnung zu entkuppeln.

3. Steckkupplungsanordnung nach Anspruch 2, wobei das Zugfahrzeugseitenteil (32) der Steckkupplungsanordnung auf eine Platte (34) montiert ist, die sich im wesentlichen senkrecht zur Fortbewegungsrichtung erstreckt, wobei die Platte (34) in Funktion ist, sich entgegengesetzt zu der Fortbewegungsrichtung (30) zu bewegen, um das Anhängerseitenteil (52) der Steckkupplungsanordnung zu verbinden, und in Fortbewegungsrichtung, um von dem Anhängerseitenteil der Steckkupplungsanordnung zu entkuppeln.

## Revendications

1. Ensemble de pivot d'attelage destiné à être monté sur la face inférieure d'une remorque pour des buts de mise en prise avec un couplage de sellette d'attelage (10) sur un véhicule tracteur, ledit ensemble comprenant un dispositif de pivot d'attelage (20) et un dispositif porteur (40) qui est monté sur celui-ci, le dispositif de pivot d'attelage ayant une plaque arrière (22) prévue avec des moyens pour le montage sur la remorque et un pivot d'attelage en saillie (24) qui à l'usage, fait saillie vers le bas à partir de ladite plaque arrière pour se mettre en prise dans une fente (16) dans le couplage de sellette d'attelage (10), ledit pivot d'attelage (24) ayant une section de base adjacente à la plaque arrière, une section d'étranglement (27) partant de la section de base et une bride terminale (29) de plus grand diamètre que la section d'étranglement, et le dispositif porteur (40) servant à monter une partie latérale de remorque (52) d'un agencement enfichable pour raccorder des alimentations de câbles électriques et de conduits de fluide, **caractérisé en ce que** le dispositif porteur (40) est monté sur le dispositif de pivot d'attelage (24) au moyen d'un collier (26) qui est retenu en rotation autour de la section de base du pivot d'attelage (24).

2. Agencement enfichable pour raccorder des alimentations, c'est-à-dire des câbles électriques et des conduits de fluide, entre un véhicule tracteur et une remorque, dans lequel un ensemble de pivot d'attelage selon la revendication 1 est prévu sur la face inférieure de la remorque, la plaque arrière (22) du pivot d'attelage étant montée sur la remorque avec un pivot d'attelage (24) faisant saillie vers le bas à partir de ladite plaque arrière, dans lequel un couplage de sellette d'attelage (10) est prévu sur le véhicule tracteur, le couplage de sellette d'attelage (10) ayant une fente (16) qui se rétrécit progressivement dans la direction de déplacement (30) du véhicule, dans laquelle fente (16), le pivot d'attelage (24) entre afin d'être mis en prise par une mâchoire de blocage de la sellette d'attelage, et dans lequel une partie latérale de tracteur (fiche ou douille) (32) de l'agencement enfichable est prévue sur le couplage de sellette d'attelage (10) au-dessous du niveau de la fente (16) pour la réception du pivot d'attelage (24) et peut fonctionner pour se déplacer à l'opposé de ladite direction de déplacement (30) afin de se raccorder à la partie latérale de remorque (52) de l'agencement enfichable et dans ladite direction de déplacement afin de se déconnecter de la partie latérale de remorque de l'agencement enfichable.

3. Agencement enfichable selon la revendication 2, dans lequel la partie latérale de tracteur (32) de l'agencement enfichable est montée sur une plaque (34) qui s'étend de manière sensiblement perpendiculaire à la direction de déplacement, laquelle plaque (34) peut fonctionner pour se déplacer à l'opposé de ladite direction de déplacement (30) afin de se raccorder à la partie latérale de remorque (52) de l'agencement enfichable et dans ladite direction de déplacement afin de se déconnecter de la partie latérale de remorque de l'agencement enfichable.
